(19) Europäisches Patentamt
European Patent Office
Office européen des brevets

(11) **EP 4 502 702 A2**

(12) **EUROPÄISCHE PATENTANMELDUNG**

(43) Veröffentlichungstag:
05.02.2025 Patentblatt 2025/06

(21) Anmeldenummer: 24219649.1

(22) Anmeldetag: 09.09.2019

(51) Internationale Patentklassifikation (IPC):
*G02B 27/00* (2006.01)

(52) Gemeinsame Patentklassifikation (CPC):
G02B 1/115; G02B 27/0012

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(30) Priorität: 13.09.2018 DE 102018122444

(62) Dokumentnummer(n) der früheren Anmeldung(en) nach Art. 76 EPÜ:
23201834.1 / 4 293 411
19769091.0 / 3 850 406

(71) Anmelder: Rodenstock GmbH
80687 München (DE)

(72) Erfinder:
- RADÜNZ, Stefan
  82234 Weßling (DE)
- SCHERSCHLICHT, Rüdiger
  82008 Unterhaching (DE)

(74) Vertreter: Schlotter, Alexander Carolus Paul
Wallinger Ricker Schlotter Tostmann
Patent- und Rechtsanwälte Partnerschaft mbB
Zweibrückenstrasse 5-7
80331 München (DE)

Bemerkungen:
Diese Anmeldung ist am 13-12-2024 als Teilanmeldung zu der unter INID-Code 62 erwähnten Anmeldung eingereicht worden.

(54) **OPTISCHES ELEMENT MIT EINEM STAPEL VON SCHICHTPAKETEN UND VERFAHREN ZUR HERSTELLUNG DES OPTISCHEN ELEMENTS**

(57) Die Erfindung betrifft ein optisches Element (100), umfassend ein Substrat (20) und ein interferometrisch reflexminderndes Schichtsystem (10) auf wenigstens einer Oberfläche (22) des Substrats (20), wobei das Schichtsystem (10) einen Stapel (40) von mindestens vier aufeinander folgenden Schichtpaketen (42, 44, 46, 48) umfasst, wobei jedes Schichtpaket (42, 44, 46, 48) eine erste Teilschicht (60) mit einer ersten optischen Dicke (t1) und eine zweite Teilschicht (62) mit einer zweiten, von der ersten optischen Dicke (t1) verschiedenen optischen Dicke (t2) umfasst, wobei ein Brechungsindex (n1) der jeweils substratnäheren ersten Teilschicht (60) größer ist als ein Brechungsindex (n2) der jeweils substratferneren zweiten Teilschicht (62) des Stapels (40), wobei das Schichtsystem (10) eine Helligkeit (L*), eine Buntheit (C*) und einen Bunttonwinkel (h) einer Restreflexfarbe aufweist, wobei der Bunttonwinkel (h) in einem Intervall eines Betrachtungswinkels (AOI) mit den Grenzwerten 0° und 30° bezogen auf eine Oberflächennormale (70) auf das Schichtsystem (10) sich um höchstens 15° ändert. Die Erfindung betrifft außerdem ein Verfahren zur Auslegung eines optischen Elements.

Fig. 1

## Beschreibung

### Stand der Technik

Die Erfindung betrifft ein optisches Element mit einem Stapel von Schichtpaketen und ein Verfahren zur Herstellung des optischen Elements.

Bekannte optische Elemente mit interferometrischer Entspiegelung, wie sie etwa aus der WO 2016/110339 A1 bekannt sind, weisen üblicherweise einen Lichtreflexionsgrad von ungefähr 1% auf, berechnet nach der Norm DIN EN ISO 13666:2013-10. Die Farbe des verbleibenden Restreflexes zeigt eine starke Variation, wenn der Betrachtungswinkel geändert wird. Die Variation erstreckt sich praktisch über die gesamte visuelle Farbskala.

### Offenbarung der Erfindung

Die Aufgabe der Erfindung ist es, ein optisches Element mit einem interferometrisch reflexmindernden Schichtsystem anzugeben, das nur eine geringe betrachtungswinkelabhängige Variation der Farbe des Restreflexes aufweist.

Die Aufgaben werden durch die Merkmale der unabhängigen Ansprüche gelöst. Günstige Ausgestaltungen und Vorteile der Erfindung ergeben sich aus den weiteren Ansprüchen, der Beschreibung und der Zeichnung.

Falls nicht anderweitig angegeben, sollen die in dieser Offenbarung verwendeten Begriffe im Sinne der Norm DIN EN ISO 13666:2013-10 (EN ISO 13666:2012 (D/E)) und der DIN EN ISO 11664-4:2012-06 (EN ISO 11664-4:2011) des Deutschen Instituts für Normung e.V. verstanden werden.

Der Begriff sichtbares Licht, sichtbare Strahlung bzw. ein sichtbarer Wellenlängenbereich betrifft gemäß Abschnitt 4.2 der Norm DIN EN ISO 13666:2013-10 optische Strahlung, die unmittelbar eine Lichtempfindung beim Menschen hervorzurufen vermag. Sichtbare Strahlung bezieht sich allgemein auf einen Wellenlängenbereich von 400 nm bis 780 nm.

Im Rahmen dieser Offenbarung kann sich sichtbare Strahlung bevorzugt auf einen Wellenlängenbereich von 400 nm bzw. 460 nm bis 700 nm beziehen, entsprechend des Sensitivitätsmaximums des menschlichen Auges. Damit kann gleichzeitig die Designflexibilität für die Auslegung der Filtereigenschaften und Flankensteilheit erhöht werden.

Der Begriff spektraler Reflexionsgrad, Reflexionsgrad oder Reflektivität bezeichnet entsprechend Abschnitt 15.1 der Norm DIN EN ISO 13666:2013-10 das Verhältnis der spektralen Strahlungsleistung, die von dem jeweiligen Material bzw. der Oberfläche oder Beschichtung reflektiert wird, zur auftreffenden Strahlungsleistung für eine bestimmte Wellenlänge ($\lambda$). Im vorliegenden Fall bezieht sich die Reflektivität auf die Reflektivität der gesamten Beschichtung mit ihren mehreren hoch- und niedrigbrechenden Teilschichten und nicht auf die Reflektivität einer einzelnen Teilschicht.

Die Erfindung geht aus von einem optischen Element, umfassend ein Substrat und ein interferometrisch reflexminderndes Schichtsystem auf wenigstens einer Oberfläche des Substrats, wobei das Schichtsystem einen Stapel von mindestens vier aufeinander folgenden Schichtpaketen umfasst, wobei jedes Schichtpaket eine erste Teilschicht mit einer ersten optischen Dicke und eine zweite Teilschicht mit einer zweiten, von der ersten optischen Dicke verschiedenen optischen Dicke umfasst, wobei ein Brechungsindex der jeweils substratnäheren ersten Teilschicht größer ist als ein Brechungsindex der jeweils substratferneren zweiten Teilschicht des Stapels, wobei das Schichtsystem eine Helligkeit, eine Buntheit und einen Bunttonwinkel einer Restreflexfarbe aufweist.

Nach einer günstigen Ausgestaltung wird vorgeschlagen, dass der Betrag einer, insbesondere absoluten oder relativen, Änderung des Bunttonwinkels der Restreflexfarbe in einem Intervall eines Betrachtungswinkels mit den Grenzwerten 0° und 30° bezogen auf eine Oberflächennormale auf das Schichtsystem kleiner als der Betrag einer, insbesondere absoluten oder relativen Änderung der Buntheit im Intervall des Betrachtungswinkels ist.

Nach einer günstigen Ausgestaltung ist der skotopische Reflexionsgrad im Intervall des Betrachtungswinkels mit den Grenzwerten 0° und 30° ist höchstens 1,5%.

Die Buntheit kann auch als Farbsättigung bezeichnet werden. Der Bunttonwinkel kann auch als Farbwinkel bezeichnet werden.

Vorteilhaft kann durch Variation der Schichtdicken der Teilschichten ein farbstabiles Schichtsystem bereitgestellt werden, dessen Restreflexfarbe sich auch bei größerer Änderung des Betrachtungswinkels nicht oder nur geringfügig ändert. Günstigerweise kann durch eine geeignete Kombination von Buntheit und Bunttonwinkel über einen großen Betrachtungswinkelbereich eine farbstabile Restreflexfarbe erreicht werden.

Die ersten, substratnäheren Teilschichten der Schichtpakete im Stapel können aus demselben ersten Material gebildet sein.

Die zweiten, substratferneren Teilschichten können ebenso aus einem gleichen, vom ersten Material der ersten Teilschichten verschiedenen zweiten Material gebildet sind. Dabei kann vorgesehen sein, dass im substratfernsten Schichtpaket zwischen erster und zweiter Teilschicht eine Funktionsschicht aus einem dritten Material angeordnet ist, die vergleichbare Brechungseigenschaften wie die zweite Teilschicht aufweist. Für Berechnungszwecke kann die Funktionsschicht gegebenenfalls der zweiten Teilschicht zugeordnet werden. Alternativ können die Materialien der ersten Teilschichten im Stapel variieren. Ebenso kann alternativ vorgesehen sein, dass die Materialien, aus denen die zweiten Teilschichten gebildet sind, im Stapel variieren.

Vorteilhaft kann das Schichtsystem vier oder fünf Schichtpakete aufweisen. Vorzugsweise sind fünf Schichtpakete vorgesehen. Es können auch mehr als fünf Schichtpakete vorgesehen sein.

Nach einer günstigen Ausgestaltung des optischen Elements kann der skotopische Reflexionsgrad Rv' im Intervall des Betrachtungswinkels AOI mit den Grenzwerten 0° und 30° höchstens 1,2% sein.

Nach einer günstigen Ausgestaltung des optischen Elements kann, insbesondere für eine Restreflexfarbe Blau, der skotopische Reflexionsgrad Rv' bei einem Betrachtungswinkel AOI von 0° etwa 0,7% sein und für Betrachtungswinkel AOI zwischen 0° und 30° zwischen 0,6% und 0,7% sein und für Betrachtungswinkel AOI von 30° bis 45° auf einen Wert von 1% steigen, und/oder für einen Betrachtungswinkel AOI von 0° der Bunttonwinkel etwa h=272° sein.

Nach einer günstigen Ausgestaltung des optischen Elements kann, insbesondere für eine Restreflexfarbe Grün, der skotopische Reflexionsgrad Rv' bei einem Betrachtungswinkel AOI von 0° etwa 0,6% sein und für Betrachtungswinkel AOI zwischen 0° und 30° zwischen 0,6% und 0,7% sein und für Betrachtungswinkel AOI von 30° bis 45° auf einen Wert von 1,5% steigen, und/oder für einen Betrachtungswinkel AOI von 0° der Bunttonwinkel etwa h=147° sein.

Nach einer günstigen Ausgestaltung des optischen Elements kann, insbesondere für eine Restreflexfarbe Gelb, der skotopische Reflexionsgrad Rv' bei einem Betrachtungswinkel AOI von 0° etwa 0,6% sein und für Betrachtungswinkel AOI zwischen 0° und 20° zwischen 0,6% und 0,7% sein und für Betrachtungswinkel AOI von 30° bis 45° auf einen Wert von 2% steigen, und/oder für einen Betrachtungswinkel AOI von 0° der Bunttonwinkel etwa h=84° sein.

Nach einer günstigen Ausgestaltung des optischen Elements kann, insbesondere für eine Restreflexfarbe Rot, der skotopische Reflexionsgrad Rv' bei einem Betrachtungswinkel AOI von 0° etwa 0,35% sein und für Betrachtungswinkel AOI zwischen 0° und 20° nahezu konstant bleiben und für Betrachtungswinkel AOI von 30° bis 45° auf einen Wert von 1 % steigen, und/oder für einen Betrachtungswinkel AOI von 0° der Bunttonwinkel etwa h=10° sein.

Nach einer günstigen Ausgestaltung des optischen Elements kann im substratfernsten Schichtpaket eine Funktionsschicht zwischen der ersten Teilschicht und der zweiten Teilschicht angeordnet sein. Vorteilhaft kann die Funktionsschicht beispielsweise zur Erhöhung der elektrischen Leitfähigkeit, zur mechanischen Spannungsegalisierung oder als Diffusionssperre wirken.

Nach einer günstigen Ausgestaltung des optischen Elements kann die Buntheit am oberen Grenzwert des Betrachtungswinkels einen Wert von höchstens 16 aufweisen. Alternativ oder zusätzlich kann der maximale Wert der Buntheit im Intervall des Betrachtungswinkels bei höchstens 16 liegen. Dies ermöglicht die Verwirklichung aller Reflexfarben mit hoher Farbkonstanz für einen Restreflex, nicht nur am Rand des Farbtonwinkels.

Nach einer günstigen Ausgestaltung des optischen Elements kann der Bunttonwinkel im Intervall des Betrachtungswinkels mit den Grenzwerten 0° und 30° sich um höchstens 15° ändern, bevorzugt um höchstens 10° ändern. Der Farbeindruck des Restreflexes des optischen Systems bleibt für einen Beobachter über einen großen Bereich des Betrachtungswinkels ganz oder nahezu unverändert.

Nach einer günstigen Ausgestaltung des optischen Elements kann der Betrag der Änderung des Bunttonwinkels in einem zweiten Intervall eines Betrachtungswinkels von 0° bis zu einem Grenzbetrachtungswinkel mit oberen Grenzwerten von 30° bis 45° bezogen auf die Oberflächennormale auf das Schichtsystem kleiner als der Betrag einer Änderung der Buntheit im zweiten Intervall des Betrachtungswinkels sein und der Betrag der Buntheit beim Grenzbetrachtungswinkel mindestens gleich 2 sein. Insbesondere kann der Bunttonwinkel h im zweiten Intervall sich höchstens um 20° ändern, bevorzugt höchstens um 15° ändern. Vorteilhaft ergibt sich eine farbstabile Restreflexfarbe auch bei größerer Variation des Betrachtungswinkels.

Nach einer günstigen Ausgestaltung des optischen Elements kann der photopische Reflexionsgrad im Intervall des Betrachtungswinkels mit den Grenzwerten 0° und 30° höchstens 1,5% sein, bevorzugt höchstens 1,2% sein.

Nach einer günstigen Ausgestaltung des optischen Elements können die ersten Teilschichten aus einem hochbrechenden Material gebildet sein.

Günstigerweise können die ersten Teilschichten wenigstens aus einer oder mehreren der Verbindungen $Ta_2O_5$, $TiO_2$, $ZrO_2$, $Al_2O_3$, $Nd_2O_5$, $Pr_2O_3$, PrTiOs, $La_2O_3$, $Nb_2O_5$, $Y_2O_3$, $HfO_2$, InSn-Oxid, $Si_3N_4$, MgO, $CeO_2$, ZnS und/oder deren Modifikationen, insbesondere deren andere Oxidationsstufen, aufweisen.

Sind zwei oder mehr Verbindungen in einer ersten Teilschicht enthalten, so können diese beispielsweise lagenweise aufgebracht sein oder auch gemischt in einer Lage, beispielsweise durch gleichzeitiges Aufbringen, vorgesehen sein.

Diese Materialien sind bekannt als Werkstoffe mit hohem klassischem Brechungsindex für den Einsatz bei optischen Elementen, wie beispielsweise zur Beschichtung von Brillengläsern. Die höherbrechenden Teilschichten können jedoch auch $SiO_2$ oder andere niedrigerbrechende Materialien enthalten, solange der Brechungsindex der gesamten Teilschicht größer als 1,6 ist, bevorzugt mindestens 1,7, besonders bevorzugt mindestens 1,8, ganz besonders bevorzugt mindestens 1,9.

Nach einer günstigen Ausgestaltung des optischen Elements können die zweiten Teilschichten aus einem niedrigbrechenden Material gebildet sein.

Die niedrigerbrechenden Teilschichten können wenigstens eines der Materialien $MgF_2$, SiO, $SiO_2$, $SiO_2$ mit Zusätzen von Al, Silane, Siloxane in Reinform oder mit deren fluorierten Derivaten, aufweisen. Die niedrigerbrechenden Teilschichten können jedoch auch eine Mischung von $SiO_2$ und $Al_2O_3$ enthalten. Bevorzugt können die niedrigerbrechenden Teilschichten wenigstens 80 Gewichtsprozent $SiO_2$, besonders bevorzugt wenigstens 90 Gewichtsprozent $SiO_2$ enthalten.

Bevorzugt ist der Brechungsindex der niedrigbrechenden Teilschichten höchstens 1,55, bevorzugt höchstens 1,48, besonders bevorzugt höchstens 1,4. Diese Angaben von Brechungsindizes beziehen sich auf Normalbedingungen bei einer Temperatur von 25° C sowie eine Referenzwellenlänge der verwendeten Lichtintensität von 550 nm.

Typische Beispiele für Schichtmaterialien mit unterschiedlichen Brechungsindizes sind Siliziumdioxid ($SiO_2$) mit einem Brechungsindex von 1,46, Aluminiumoxid ($Al_2O_3$) mit einem Brechungsindex von 1,7, Zirkondioxid ($ZrO_2$) mit einem Brechungsindex von 2,05, Praseodym-Titanoxid (PrTiOs) mit einem Brechungsindex von 2,1, Titanoxid ($TiO_2$) und Zinksulfid (ZnS) mit jeweils einem Brechungsindex von 2,3. Diese Werte stellen mittlere Werte dar, die je nach Beschichtungsverfahren und Schichtdicke bis zu 10% variieren können.

Übliche optische Gläser weisen Brechungsindizes zwischen 1,5 und 2,0 auf. Schichtmaterialien mit Brechungsindizes kleiner als 1,5 wie $MgF_2$, $SiO_2$, $Al_2O_3$ werden deshalb in Kombination mit optischen Gläsern als niedrig brechende Materialien bezeichnet, Schichtmaterialien mit Brechungsindizes größer als 2,0 wie $ZrO_2$, PrTiOs, $TiO_2$, ZnS werden in Kombination mit optischen Gläsern als hoch brechende Materialien bezeichnet.

Der Unterschied der Brechungsindizes zwischen den hochbrechenden und niedrigbrechenden Materialien der ersten und zweiten Teilschichten beträgt vorzugsweise je nach Beschichtungsverfahren und Schichtdicke mindestens 0,2 bis mindestens 0,5.

Die verwendeten Materialien für diese Art von Beschichtungen sind die typischen Materialien, die in der Optik mittels beispielsweise PVD-Verfahren (PVD = Physical Vapour Deposition (physikalische Gasphasenabscheidung)) oder CVD-Verfahren (CVD = Chemical Vapour Deposition (chemische Gasphasenabscheidung)) auf ein Substrat aufgebracht werden.

Nach einer günstigen Ausgestaltung des optischen Elements können zumindest die ersten Teilschichten aus einem gleichen ersten Material gebildet sind und die zweiten Teilschichten zumindest überwiegend aus einem gleichen zweiten Material gebildet sind.

Optional können die zweiten Teilschichten aus dem gleichen zweiten Material gebildet sein und lediglich im substratfernsten Schichtpaket eine Funktionsschicht zwischen der ersten Teilschicht und der zweiten Teilschicht aufweisen. Die Funktionsschicht kann niedrigbrechend sein und bedarfsweise der zweiten Teilschicht für Berechnungszwecke zugeschlagen werden.

Eine Auslegung eines erfindungsgemäßen optischen Elements kann mit einem günstigen Verfahren erfolgen.

Dabei umfasst das optische Element ein Substrat und ein interferometrisch reflexminderndes Schichtsystem auf wenigstens einer Oberfläche des Substrats, wobei das Schichtsystem einen Stapel von mindestens vier aufeinander folgenden Schichtpaketen umfasst, wobei jedes Schichtpaket eine erste Teilschicht mit einer ersten optischen Dicke und eine zweite Teilschicht mit einer zweiten, von der ersten optischen Dicke verschiedenen optischen Dicke umfasst, wobei ein Brechungsindex der jeweils substratnäheren ersten Teilschicht größer ist als ein Brechungsindex der jeweils substratferneren zweiten Teilschicht des Stapels, wobei das Schichtsystem eine Helligkeit, eine Buntheit und einen Bunttonwinkel einer Restreflexfarbe aufweist. Der Betrag einer, insbesondere absoluten oder relativen, Änderung des Bunttonwinkels der Restreflexfarbe in einem Intervall eines Betrachtungswinkels mit den Grenzwerten 0° und 30° bezogen auf eine Oberflächennormale auf das Schichtsystem ist vorzugsweise kleiner als der Betrag einer, insbesondere absoluten oder relativen, Änderung der Buntheit im Intervall des Betrachtungswinkels.

Bei dem Verfahren können die Schritte durchgeführt werden: Definieren eines Schichtdesigns, umfassend zumindest ein erstes Material für hochbrechende Teilschichten und ein zweites Material für niedrigbrechende Teilschichten, Anzahl gewünschter Schichtpakete mit den Teilschichten, Startwerte der Dicke der Teilschichten; Definieren von Ziel-Farbwerten, umfassend Helligkeit, Buntheit und Bunttonwinkel zumindest an Grenzwerten für ein Intervall eines Betrachtungswinkels mit Grenzwerten von 0° und 30°; und Durchführen eines Optimierungsverfahrens zur Variation der Einzelschichtdicken bis ein Optimierungsziel erreicht ist.

Günstigerweise kann für die Buntheit am oberen Grenzwert des Betrachtungswinkels ein Wert von höchstens 16 gewählt werden. Alternativ oder zusätzlich kann für die Buntheit ein maximaler Wert im Intervall des Betrachtungswinkels von höchstens 16 gewählt werden. Dies ermöglicht die Verwirklichung aller Reflexfarben mit hoher Farbkonstanz für einen Restreflex, nicht nur am Rand des Farbtonwinkels.

Günstigerweise können die Ziel-Farbwerte an den Grenzwerten des Intervalls gleich oder ähnlich gewählt werden.

Insbesondere können maximale Abweichungen für die Bunttonwinkel unterschiedlicher Restreflexfarben vorgegeben werden.

Für die Restreflexfarbe Blau kann eine günstige zulässige Änderung $\Delta h$ des Bunttonwinkels im Intervall des Betrachtungswinkels von 0° bis 30° bevorzugt höchstens $\Delta h=4°$, besonders bevorzugt höchstens $\Delta h=3,5°$ betragen. Eine günstige zulässige Änderung Δh des Bunttonwinkels im Intervall des Betrachtungswinkels von 0° bis 33° kann bevorzugt höchstens Δh=5°, besonders bevorzugt höchstens Δh=4,5° betragen.

Für eine Restreflexfarbe Grün kann eine günstige zulässige Änderung Δh des Bunttonwinkels im Intervall des Betrachtungswinkels von 0° bis 30° bevorzugt höchstens Δh=3°, besonders bevorzugt höchstens Δh=2° betragen. Eine günstige zulässige Änderung Δh des Bunttonwinkels im Intervall des Betrachtungswinkels von 0° bis 45° kann bevorzugt höchstens Δh=5°, besonders bevorzugt höchstens Δh=4,6° betragen.

Für eine Restreflexfarbe Gelb kann eine günstige zulässige Änderung Δh des Bunttonwinkels im Intervall des Betrachtungswinkels von 0° bis 30° bevorzugt höchstens Δh=1,5°, besonders bevorzugt höchstens Δh=0,9° betragen. Eine günstige zulässige Änderung Δh des Bunttonwinkels im Intervall des Betrachtungswinkels von 0° bis 45° kann bevorzugt höchstens Δh=5°, besonders bevorzugt höchstens Δh=4,6° betragen.

Für eine Restreflexfarbe Rot kann eine günstige zulässige Änderung Δh des Bunttonwinkels im Intervall des Betrachtungswinkels von 0° bis 30° bevorzugt höchstens Δh=6°, besonders bevorzugt höchstens Δh=5,3° betragen. Eine günstige zulässige Änderung Δh des Bunttonwinkels im Intervall des Betrachtungswinkels von 0° bis 45° kann bevorzugt höchstens Δh=20°, besonders bevorzugt höchstens Δh=16,8° betragen.

## Zeichnung

Weitere Vorteile ergeben sich aus der folgenden Zeichnungsbeschreibung. In den Figuren sind Ausführungsbeispiele der Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

**Es zeigen beispielhaft:**

Fig. 1   ein Ausführungsbeispiel der Erfindung, bei dem ein Schichtsystem vier Schichtpakete auf einem Substrat aufweist;

Fig. 2   ein Ausführungsbeispiel der Erfindung, bei dem ein Schichtsystem fünf Schichtpakete auf einem Substrat aufweist;

Fig. 3   eine Reflektivität eines erfindungsgemäßen Schichtsystems mit einer Restreflexfarbe Blau im Wellenlängenbereich zwischen 280 nm und 1400 nm;

Fig. 4   ein Detail der Darstellung in Figur 3 im Wellenlängenbereich 380 nm bis 780 nm;

Fig. 5   abhängig vom Einfallswinkel zwischen 0° und 45° einen Verlauf der Buntheit C* mit der Restreflexfarbe Blau nach Figur 3;

Fig. 6   abhängig vom Einfallswinkel zwischen 0° und 45° einen Verlauf der Helligkeit L* der Restreflexfarbe Blau nach Figur 3;

Fig. 7   abhängig vom Einfallswinkel zwischen 0° und 45° einen Verlauf der Bunttonwinkels h mit der Restreflexfarbe Blau nach Figur 3;

Fig. 8   abhängig vom Einfallswinkel zwischen 0° und 45° einen Verlauf des photopischen Reflexionsgrads Rv und des skotopischen Reflexionsgrads Rv' mit der Restreflexfarbe Blau nach Figur 3;

Fig. 9   eine Reflektivität eines erfindungsgemäßen Schichtsystems mit einer Restreflexfarbe Grün im Wellenlängenbereich zwischen 280 nm und 1400 nm;

Fig. 10   ein Detail der Darstellung in Figur 9 im Wellenlängenbereich 380 nm bis 780 nm;

Fig. 11   abhängig vom Einfallswinkel zwischen 0° und 45° einen Verlauf der Buntheit C* mit der Restreflexfarbe Grün nach Figur 9;

Fig. 12   abhängig vom Einfallswinkel zwischen 0° und 45° einen Verlauf der Helligkeit L* der Restreflexfarbe Grün nach Figur 9;

Fig. 13   abhängig vom Einfallswinkel zwischen 0° und 45° einen Verlauf der Bunttonwinkels h mit der Restreflexfarbe Grün nach Figur 9;

Fig. 14   abhängig vom Einfallswinkel zwischen 0° und 45° einen Verlauf des photopischen Reflexionsgrads Rv und des skotopischen Reflexionsgrads Rv' mit der Restreflexfarbe Grün nach Figur 9;

Fig. 15   eine Reflektivität eines erfindungsgemäßen Schichtsystems mit einer Restreflexfarbe Gelb im Wellenlängenbereich zwischen 280 nm und 1400 nm;

Fig. 16   ein Detail der Darstellung in Figur 15 im Wellenlängenbereich 380 nm bis 780 nm;

Fig. 17   abhängig vom Einfallswinkel zwischen 0° und 45° einen Verlauf der Buntheit C* mit der Restreflexfarbe Gelb nach Figur 15;

Fig. 18   abhängig vom Einfallswinkel zwischen 0° und 45° einen Verlauf der Helligkeit L* der Restreflexfarbe Gelb nach Figur 15;

Fig. 19    abhängig vom Einfallswinkel zwischen 0° und 45° einen Verlauf der Bunttonwinkels h mit der Restreflexfarbe Gelb nach Figur 15;

Fig. 20    abhängig vom Einfallswinkel zwischen 0° und 45° einen Verlauf des photopischen Reflexionsgrads Rv und des skotopischen Reflexionsgrads Rv' mit der Restreflexfarbe Gelb nach Figur 15;

Fig. 21    eine Reflektivität eines erfindungsgemäßen Schichtsystems mit einer Restreflexfarbe Rot im Wellenlängenbereich zwischen 280 nm und 1400 nm,

Fig. 22    ein Detail der Darstellung in Figur 21 im Wellenlängenbereich 380 nm bis 780 nm;

Fig. 23    abhängig vom Einfallswinkel zwischen 0° und 45° einen Verlauf der Buntheit C* mit der Restreflexfarbe Rot nach Figur 21;

Fig. 24    abhängig vom Einfallswinkel zwischen 0° und 45° einen Verlauf der Helligkeit L* der Restreflexfarbe Rot nach Figur 21;

Fig. 25    abhängig vom Einfallswinkel zwischen 0° und 45° einen Verlauf der Bunttonwinkels h mit der Restreflexfarbe Rot nach Figur 21;

Fig. 26    abhängig vom Einfallswinkel zwischen 0° und 45° einen Verlauf des photopischen Reflexionsgrads Rv und des skotopischen Reflexionsgrads Rv' mit der Restreflexfarbe Rot nach Figur 21;

Fig. 27    ein Polardiagramm mit Messwerten an Schichtsystemen nach der Erfindung mit verschiedenen Restreflexfarben und einem Schichtsystem nach dem Stand der Technik in einem ersten Intervall eines Betrachtungswinkels von 0° bis 30°;

Fig. 28    das Polardiagramm nach Figur 27 in einem weiteren Intervall des Betrachtungswinkels von 0° bis 45°;

Fig. 29    ein günstiges Verfahren zur Auslegung eines erfindungsgemäßen Schichtsystems.

## Ausführungsformen der Erfindung

In den Figuren sind gleichartige oder gleichwirkende Komponenten mit gleichen Bezugszeichen beziffert. Die Figuren zeigen lediglich Beispiele und sind nicht beschränkend zu verstehen.

Im Folgenden verwendete Richtungsterminologie mit Begriffen wie "links", "rechts", "oben", "unten", "davor" "dahinter", "danach" und dergleichen dient lediglich dem besseren Verständnis der Figuren und soll in keinem Fall eine Beschränkung der Allgemeinheit darstellen. Die dargestellten Komponenten und Elemente, deren Auslegung und Verwendung können im Sinne der Überlegungen eines Fachmanns variieren und an die jeweiligen Anwendungen angepasst werden.

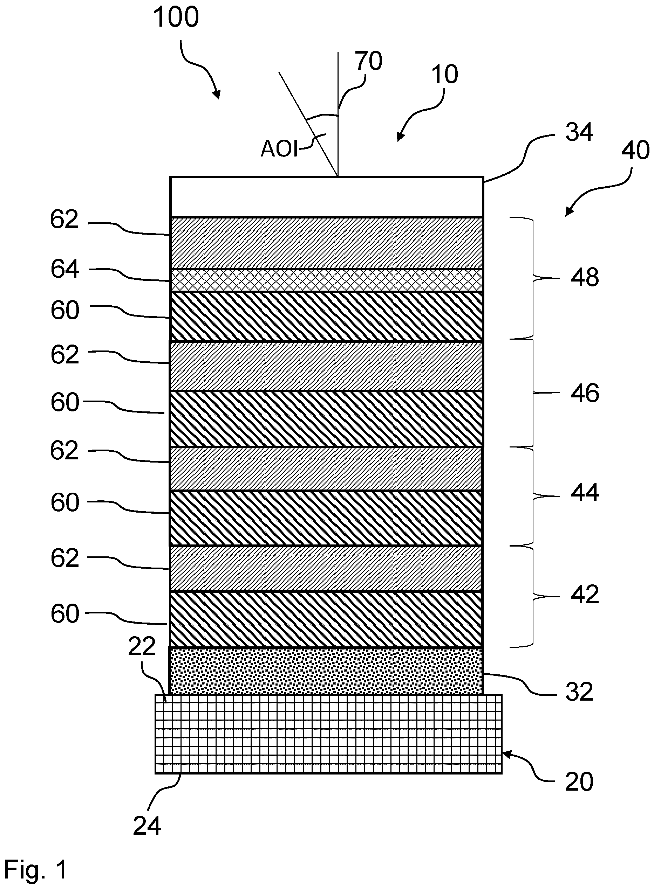

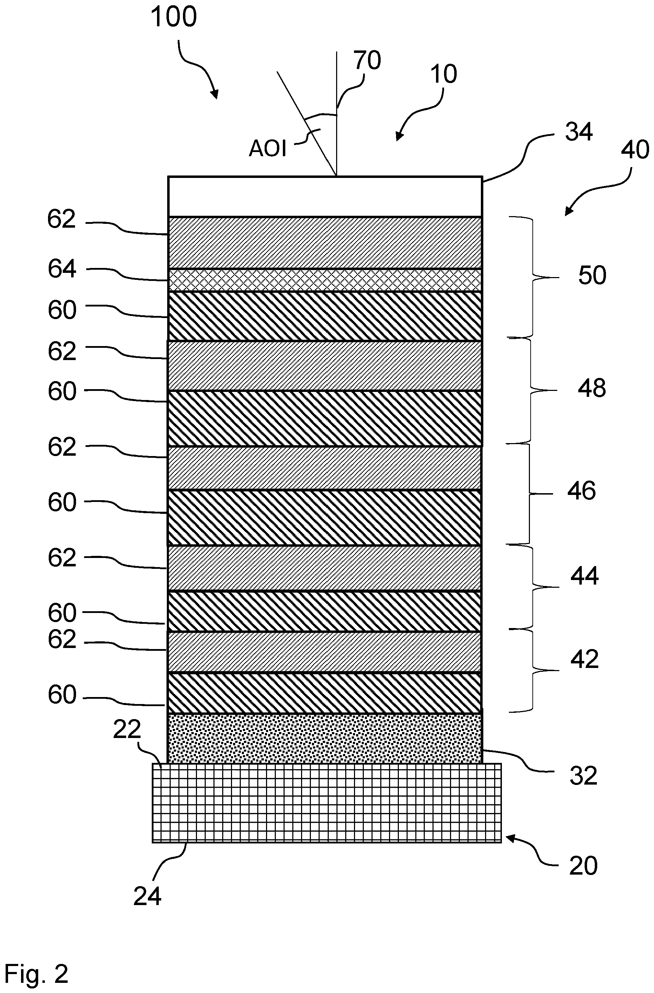

Die Figuren 1 und 2 zeigen exemplarisch ein optisches Element 100, beispielsweise ein Brillenglas, nach einem Ausführungsbeispiel der Erfindung.

Das optische Element 100 umfasst in Figur 1 ein Schichtsystem 10 mit einem Stapel 40 von vier Schichtpaketen 42, 44, 46, 48 auf einer Oberfläche 22 eines Substrats 20.

In Figur 2 umfasst das optische Element 100 ein Schichtsystem 10 mit einem Stapel 40 von fünf Schichtpaketen 42, 44, 46, 48, 50 auf einer Oberfläche 22 eines Substrats 20.

Bis auf die unterschiedliche Anzahl von Schichtpaketen 42, 44, 46, 48, 50 (vier in Figur 1 und fünf in Figur 2) gelten die weiteren Ausführungen allgemeiner und spezieller Art zu Figur 1 auch für die Ausgestaltung in Figur 2, wenn nichts anderes gesagt ist.

Betrachtet wird das Schichtsystem von einem Betrachter in einem Betrachtungswinkel AOI von 0° bis zu einem Grenzwinkel, beispielsweise 30°, gemessen von der Oberflächennormalen 70 aus.

Das Substrat 20 ist beispielsweise ein Kunststoff, insbesondere ein transparenter Kunststoff für ein Brillenglas.

Der Begriff Brillenglas bezeichnet im Rahmen der vorliegenden Offenbarung insbesondere ein beschichtetes Brillenglas gemäß Abschnitt 8.1.13 der Norm DIN EN ISO 13666:2013-10, also ein Brillenglas, auf das eine oder mehrere Oberflächenbeschichtungen aufgebracht wurden, insbesondere um eine oder mehrere seiner Eigenschaften zu ändern.

Bevorzugt können solche Brillengläser insbesondere vorteilhaft eingesetzt werden als Brillen (mit und ohne Korrektur), Sonnenbrillen, Skibrillen, Arbeitsplatzbrillen, sowie Brillen in Verbindung mit kopfgetragenen Anzeigeeinrichtungen (so genannte "head-mounted displays").

Der Begriff Brillenglas kann im Rahmen der vorliegenden Offenbarung ferner Brillenglas-Halbfabrikate umfassen, insbesondere ein Brillenglasblank oder Brillenglas-Halbfertigprodukt gemäß Abschnitt 8.4.2 der Norm DIN EN ISO 13666:2013-10, also einen Linsenrohling oder Blank mit nur einer optisch fertig bearbeiteten Fläche.

Bezogen auf die Ausgestaltungen in den Figuren 1 und 2 kann die gegenüberliegende Oberfläche 24 des Substrats 20 optional ein weiteres, ähnliches oder identisches Schichtsystem 10, keine Beschichtung oder lediglich schützende Beschichtung aufweisen.

Als unterste Lage auf dem Substrat 20 weist das Schichtsystem 10 in üblicher Weise eine einlagige oder mehrlagige Zwischenschicht 32 auf, beispielsweise zur Verbesserung der Haftung des Stapels 40 und/oder als Kratzschutz für das Substrat 20. Diese Zwischenschicht 32 kann beispielsweise aus unterstöchiometrischen niederbrechenden Metalloxiden, Chrom, Silanen oder Siloxanen bestehen Die Zwischenschicht 32 ist für die weiteren Betrachtungen nicht relevant.

Auf der Zwischenschicht 32 sind in Figur 1 die vier Schichtpakete 42, 44, 46, 48 des Stapels 40 aufeinander folgend angeordnet, wobei jedes der Schichtpakete 42, 44, 46, 48 jeweils aus einer substratnäheren Teilschicht 60 gefolgt von einer substratferneren Teilschicht 62 besteht.

Vorzugsweise ist jede der substratnäheren Teilschichten 60 aus einem identischen ersten Material gebildet. Vorzugsweise ist das erste Material ein höherbrechendes Material mit einem ersten Brechungsindex n1.

Vorzugsweise ist jede der substratfernen Teilschichten 62 aus einem identischen zweiten Material gebildet. Vorzugsweise ist das zweite Material ein niedrigbrechendes Material mit einem zweiten Brechungsindex n2. Der Brechungsindex n1 ist größer als der Brechungsindex n2, vorzugsweise ist der Unterschied der Brechungsindizes n1, n2 mindestens 0,2, vorzugsweise bis mindestens 0,5.

Die Reihenfolge der Teilschichten 60, 62 bleibt im Stapel 40 gleich, so dass in jedem Schichtpaket 42, 44, 46, 48 die jeweilige substratnähere Teilschicht 60 immer die höherbrechende und die jeweilige substratfernere Teilschicht 62 immer die niedrigbrechende der Teilschichten 60, 62 ist.

Insbesondere kann es sich bei den höherbrechenden Teilschichten 60 um Schichten aus hochbrechenden Materialien handeln und bei den niedrigerbrechenden Teilschichte 62 um Schichten aus niedrigbrechenden Materialien.

Die Schichtpakete 42, 44, 46, 48 im Stapel 40 unterscheiden sich nur in ihrer jeweiligen Dicke und/oder in den Dicken der einzelnen Teilschichten 60, 62 im jeweiligen Schichtpaket 42, 44, 46, 48.

Der Stapel 40 ist in an sich bekannter Weise mit einer Deckschicht 34 abgeschlossen, die beispielsweise der Pflege des Schichtsystems 10 dient. Die Deckschicht 34 wird auf die letzte optisch relevante Teilschicht 62 des obersten Schichtpakets 48 des Stapels 40 aufgebracht und kann fluorhaltige Moleküle enthalten. Die Deckschicht 34 verleiht dem Stapel 40 üblicherweise eine verbesserte Pflegeeigenschaft, mit Eigenschaften wie eine wasserabweisende und ölabweisende Funktion bei einer Oberflächenenergie von typischerweise kleiner 15 mN/m.

Die Deckschicht 34 ist für die weiteren Betrachtungen nicht relevant.

Das oberste, substratfernste Schichtpaket 48 (bzw. Schichtpaket 50 in Figur 2) weist optional zwischen der substratnäheren Teilschicht 60 und der substratferneren Teilschicht 62 eine Funktionsschicht 64 auf, welche beispielsweise zur Erhöhung der elektrischen Leitfähigkeit, zur mechanischen Spannungsegalisierung oder als Diffusionssperre wirken kann. Diese Funktionsschicht 64 kann aus einem niedrigbrechenden Material gebildet sein, sowie mit anderen Metalloxiden wie zum Beispiel Aluminium legiert sein. Für Berechnungszwecke und Simulationszwecke der optische Eigenschaften kann die Funktionsschicht 64 der niedrigerbrechenden Teilschicht 62 des obersten, substratfernsten Schichtpakets 48 (bzw. Schichtpaket 50 in Figur 2) zugeschlagen werden oder gegebenenfalls, beispielsweise bei verhältnismäßig geringer Schichtdicke, unberücksichtigt bleiben.

Die optischen Eigenschaften des Stapels 40 des Schichtsystems 10 können rechnerisch mittels an sich bekannter Berechnungsverfahren und/oder Optimierungsverfahren simuliert werden. Die Herstellung des Schichtsystems 10 erfolgt sodann mit den bestimmten Schichtdicken der einzelnen Teilschichten 60, 62 der Schichtpakete 42, 44, 46, 48.

Bei der Herstellung von optischen Schichtsystemen 10 werden dessen optische Eigenschaften des Schichtsystems 10 bei der Herstellung der Teilschichten 60, 62 eingestellt. Beispielsweise kann das aus der WO 2016/110339 A1 bekannte Verfahren eingesetzt werden, das im Folgenden kurz umrissen ist. Mit dem bekannten Verfahren können verschiedene optische Effekte wie Verspiegelung oder Reflexminderung in einem Materialsystem erzielt werden, indem nur die Schichtdicken verändert werden, das verwendete Material jedoch gleich bleibt. Es sind jedoch auch andere Verfahren möglich.

Durch eine in der WO 2016/110339 A1 beschriebene Variation der Schichtpaketdicken bei gleichbleibenden Materialien lassen sich unterschiedliche Reflektivitäten, insbesondere für eine reflexmindernde Wirkung erzielen. Dies wird durch Minimierung bzw. Optimierung eines Parameters $\sigma$ erreicht. Der Parameter $\sigma$ ist wiederum eine Funktion der Schichtdicken der Teilschichten 60, 62, bzw. von Verhältnissen der optischen Dicken t1, t2 der Teilschichten 60, 62 eines jeden der vier Schichtpakete 42, 44, 46, 48 nach Figur 1 bzw. fünf Schichtpakete 42, 44, 46, 48, 50 nach Figur 2 im Stapel 40.

Bei einer bestimmten Wellenlänge $\lambda$ bestimmt sich die optische Dicke t einer Schicht, auch FWOT (full wave optical thickness) genannt, zu

$$t = \frac{d}{\lambda} \cdot n$$

wobei d die Schichtdicke, $\lambda$ die Auslegungswellenlänge und n den Brechungsindex der Teilschicht 60, 62 darstellt.

Eine reflexmindernde Wirkung durch den Stapel 40 kann für eine vorgebbare Reflektivität $R_m$ des Stapels 40 erreicht werden, wenn das Produkt aus Reflektivität $R_m$ und dem Parameter $\sigma$ kleiner als 1 eingestellt ist:

$$R_m \cdot \sigma < 1$$

Die Reflektivität $R_m$, auch Reflexionsgrad genannt, beschreibt hierbei das Verhältnis von reflektierter zu einfallender Intensität eines Lichtstrahls als Energiegröße. Die Reflektivität $R_m$ wird zweckmäßigerweise über den Bereich des Lichts von 380 nm bis 800 nm gemittelt und auf 100 % bezogen.

Eine solche Bedingung $R_m \cdot \sigma < 1$ kann für einen Optimierungsprozess des Verfahrens zur Herstellung des Schichtsystems 10 als Randbedingung angesetzt werden.

Die optischen Dicken t1, t2 der ersten und zweiten Teilschichten 60, 62 der Schichtpakete 42, 44, 46, 48 werden dadurch bestimmt, dass der Parameter $\sigma$ mittels eines Optimierungsverfahrens, bevorzugt mittels Variationsrechnung, bestimmt wird.

Bevorzugt werden dabei die Dicken der jeweiligen Teilschichten 60, 62 bei vier Schichtpaketen 42, 44, 46, 48 im Stapel 40 abhängig von einem Quotienten $v_i$ (mit i=1, 2, 3, 4) der ersten optischen Dicke t1 jeweils der höherbrechenden ersten Teilschicht 60 und der zweiten optischen Dicke t2 der niedrigerbrechenden zweiten Teilschicht 62 des jeweiligen Schichtpakets 42, 44, 46, 48 gebildet.

Die Indizes i=1, 2, 3, 4 stehen für die Reihenfolge der Schichtpakete 42, 44, 46, 48 auf dem Substrat 20. Entsprechend stehen $v_1$ für das substratnächste Schichtpaket 42 und $v_4$ für das substratfernste Schichtpaket 48.

Für einen Stapel aus vier aufeinander folgenden Schichtpaketen 42, 44, 46, 48 kann der Parameter $\sigma$ aus

$$\sigma = \frac{v_1 + v_2}{v_3 + v_4}$$

bestimmt werden.

Die ersten und zweiten Teilschichten 60, 62 werden mit den derart berechneten Parametern, insbesondere den optischen Dicken t1, t2 der Teilschichten 60, 62 des Stapels 40 hergestellt.

In einer vorteilhaften Ausgestaltung kann bei einem Schichtsystem 10 nach Figur 2 der Parameter $\sigma$ für einen Stapel 40 mit fünf aufeinander folgenden Schichtpaketen 42, 44, 46, 48, 50 aus der Beziehung

$$\sigma = \frac{v_1}{\sum_{i=2}^{nmax} v_i}$$

bestimmt werden, wobei, i= von 2 bis nmax=5 läuft.

Die Indizes i=1, 2, 3, 4, 5 stehen für die Reihenfolge der Schichtpakete 42, 44, 46, 48, 50 auf dem Substrat 20. Entsprechend stehen $v_1$ für das substratnächste Schichtpaket 42 und $v_5$ für das substratfernste Schichtpaket 50.

Es ist bekannt, wahrnehmungsbezogene Farben im so genannten CIE-L*a*b* Farbraum (vereinfacht CIELab-Farbraum) in kartesischen Koordinaten anzugeben, wie in der DIN EN ISO 11664-4:2012-06 (EN ISO 11664-4:2011) dargelegt ist.

L* ist die CIELab-Helligkeit, a*, b* sind die CIELab-Koordinaten, C* die CIELab-Buntheit und $h_{ab}$ der CIELab-Bunttonwinkel.

Die L*-Achse beschreibt die Helligkeit (Luminanz) der Farbe mit Werten von 0 bis 100. Die L*-Achse steht im Nullpunkt senkrecht auf der a*b*-Ebene. Sie kann auch als Neutralgrauachse bezeichnet werden, da zwischen den Endpunkten Schwarz (L*=0) und Weiß (L*=100) alle unbunten Farben (Grautöne) enthalten sind.

Auf der a*-Achse liegen sich Grün und Rot gegenüber, die b*-Achse verläuft zwischen Blau und Gelb. Komplementäre Farbtöne stehen sich jeweils um 180° gegenüber, in ihrer Mitte, d.h. dem Koordinatenursprung a*=0, b*=0, ist Grau.

Die a*-Achse beschreibt den Grünanteil oder Rotanteil einer Farbe, wobei negative Werte für Grün und positive Werte für Rot stehen. Die b*-Achse beschreibt den Blauanteil oder Gelbanteil einer Farbe, wobei negative Werte für Blau und positive Werte für Gelb stehen.

Die a*-Werte reichen von ca. -170 bis +100, die b*-Werte von -100 bis +150, wobei die Maximalwerte nur bei mittlerer Helligkeit bestimmter Farbtöne erreicht werden. Der CIELab-Farbkörper hat im mittleren Helligkeitsbereich seine größte Ausdehnung, diese ist aber je nach Farbbereich unterschiedlich in Höhe und Größe.

Der CIELab-Bunttonwinkel $h_{ab}$ muss zwischen 0° und 90° liegen, wenn sowohl a* und b* positiv sind, zwischen 90° und 180°, wenn b* positiv ist und a* negativ, zwischen 180° und 270°, wenn sowohl a* und b* negativ sind und zwischen 270° und 360°, wenn b* negativ ist und a* positiv.

Beim CIE-L*C*h-Farbraum (vereinfacht CIELCh-Farbraum) sind die kartesischen Koordinaten des CIELab-Farbraums in Polarkoordinaten transformiert. Dabei werden die Zylinderkoordinaten C* (Buntheit, relative Farbsättigung, Entfernung von der L-Achse im Zentrum) und h (Bunttonwinkel, Winkel des Farbtons im CIELab-Farbkreis) angegeben.

Die CIELab-Helligkeit L* bleibt dabei unverändert.

Der Bunttonwinkel h ergibt sich aus den a*- und b*-Achsen

$$h=\arctan\left(\frac{b^*}{a^*}\right)$$

Der Bunttonwinkel h steht hier für die Farbe des Restreflexes der reflexmindernden Schichtsystems 10.

Die Buntheit C* ergibt sich zu

$$C^*=\sqrt{\left(a^*\right)^2+\left(b^*\right)^2}$$

Die Buntheit C* wird auch als Farbtiefe bezeichnet.

Bei bekannten reflexmindernden Beschichtungen ist die Farbe des Restreflexes auf einen senkrechten Einfall des Lichts auf das Schichtsystem 10 (AOI=0°) optimiert und variiert stark bei Änderung des Betrachtungswinkels AOI.

Wie in den folgenden Figuren für verschiedene Restreflexfarben Blau, Grün, Gelb, Rot gezeigt ist, kann ein erfindungsgemäßes Schichtsystem 10 mit vier Schichtpaketen 42, 44, 46, 48 oder fünf Schichtpaketen 42, 44, 46, 48, 50 gebildet werden, das auch bei Variation des Betrachtungswinkels AOI im Bereich zwischen 0° und 30° weitestgehend farbstabil bleibt. Mit anderen Worten, der Farbeindruck des Restreflexes ändert sich praktisch nicht, wenn ein Betrachter das optische Element 100 unter Betrachtungswinkeln AOI in diesem Winkelintervall betrachtet.

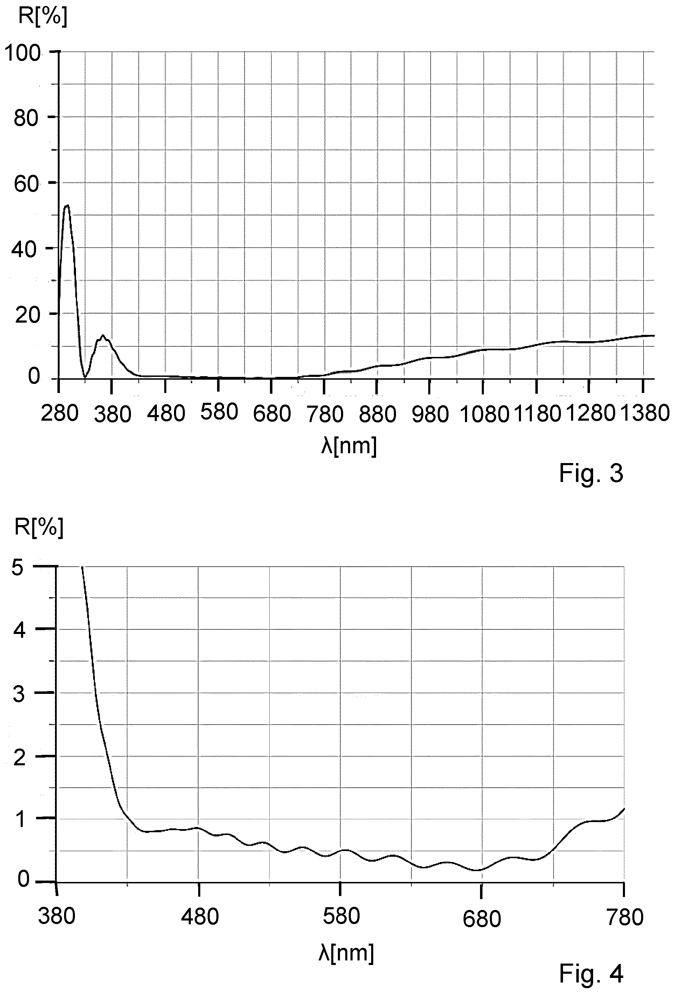

Die Figuren 3 bis 8 zeigen Werte eines erfindungsgemäßen Schichtsystems 10 mit der Restreflexfarbe Blau.

Figur 3 zeigt eine Reflektivität R in Prozent des erfindungsgemäßen Schichtsystems 10 im Wellenlängenbereich zwischen 280 nm und 1400 nm, und Figur 4 zeigt ein Detail der Darstellung in Figur 3 im Wellenlängenbereich 380 nm bis 780 nm. Die Reflektivität R des Schichtsystems 10 ist in Draufsicht auf das Schichtsystem 10, d.h. bei kleinen Winkeln AOI um 0° gemessen von der Oberflächennormalen 70 (Figur 1, 2), bestimmt.

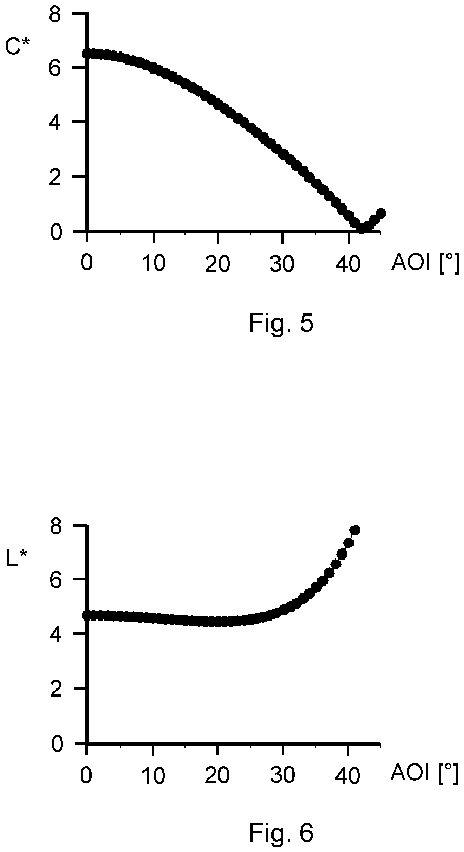

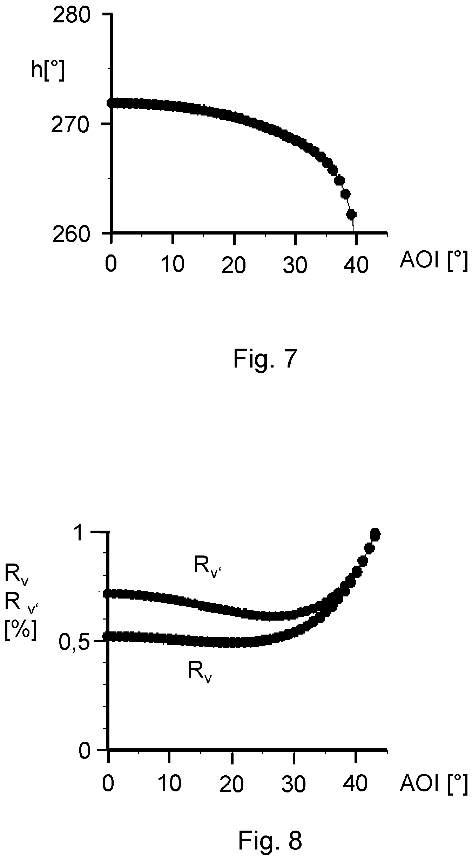

Figur 5 zeigt abhängig vom Betrachtungswinkel AOI zwischen 0° und 45° einen Verlauf der Buntheit C*, Figur 6 zeigt abhängig vom Betrachtungswinkel AOI zwischen 0° und 45° einen Verlauf der Helligkeit L*, Figur 7 zeigt abhängig vom Betrachtungswinkel AOI zwischen 0° und 45° einen Verlauf der Bunttonwinkels h. Figur 8 zeigt abhängig vom Betrachtungswinkel AOI zwischen 0° und 45° einen Verlauf des photopischen Reflexionsgrads Rv und des skotopischen Reflexionsgrads Rv'.

Die Reflektivität R fällt von etwa 55% bei 280 nm mit einem kleinen Maximum um 380 nm und steigt bei etwa 730 nm langsam wieder an (Figur 3). Wie zu erkennen ist, ist die Reflektivität R zwischen 480 nm und 780 nm sehr gering und liegt unter 1% (Figur 4). Zwischen 530 nm und 730 nm liegt die Reflektivität R teilweise sogar unter 0,5%.

Im AOI-Intervall zwischen 0° und 45° fällt die Buntheit C* von etwa 6,5 bei 0° auf etwa 2,5 bei 30° bis auf 0 bei etwa 42°, um dann anzusteigen (Figur 5). Bei 45° ist der Wert der Buntheit C* ungefähr 1. Der höchste Wert der Buntheit C* liegt im AOI-Intervall für die Farbe Blau bei C*=7. Der höchste Wert der Buntheit C* liegt am unteren Grenzwert des AOI-Intervalls.

Im AOI-Intervall zwischen 0° und 25° variiert die Helligkeit L* kaum mit einem geringen Abfall und steigt bei 30° von etwa L*=4,5 auf etwa L*=8 bei 45° (Figur 6).

Im AOI-Intervall zwischen 0° und 45° fällt der Bunttonwinkel h zwischen 0° und 30° gering von etwa h=272° auf etwas über h=268° und fällt dann steiler ab auf h=260° bei AOI=40° (Figur 7).

Für die Restreflexfarbe Blau ist die Änderung Δh des Bunttonwinkels h zwischen 0°≤AOI≤30° bevorzugt höchstens Δh=4°, besonders bevorzugt höchstens Δh=3,5°. Die Änderung des Bunttonwinkels h zwischen 0°≤AOI≤33° ist bevorzugt höchstens Δh=5°, besonders bevorzugt höchstens Δh=4,5°.

Im AOI-Intervall zwischen 0° und 45° variieren die Kurven des photopischen Reflexionsgrads Rv und des skotopischen Reflexionsgrads Rv' praktisch nicht und bleiben bei 0,5 (Rv) bzw. 0,7-0,6 (Rv') und steigen zwischen AOI=30° bis 45° auf einen Wert von 1 (Figur 8).

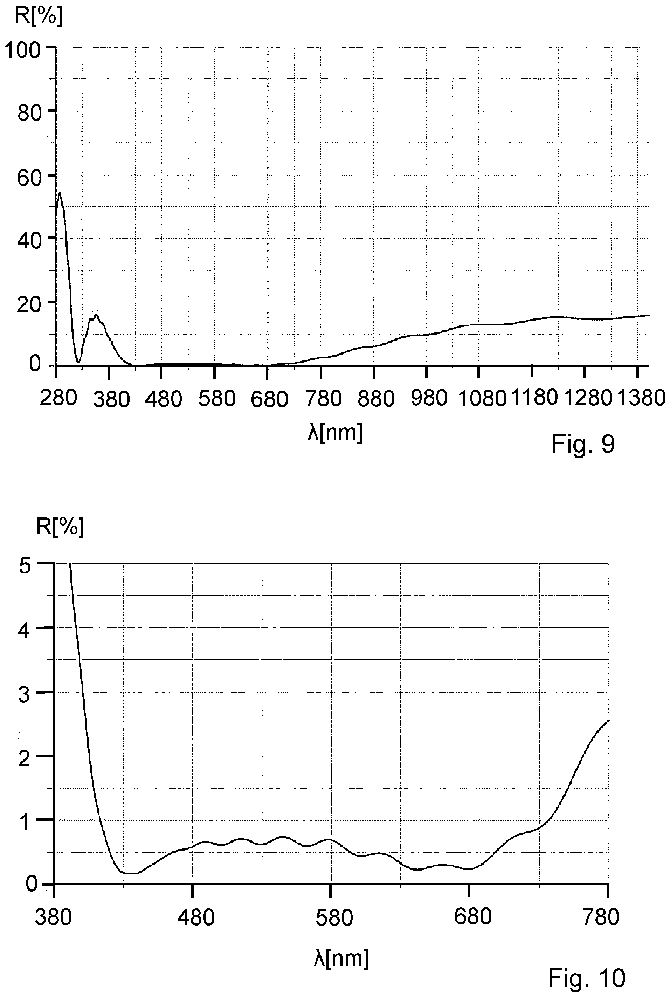

Die Figuren 9 bis 14 zeigen Werte eines erfindungsgemäßen Schichtsystems 10 mit der Restreflexfarbe Grün.

Figur 9 zeigt eine Reflektivität R des erfindungsgemäßen Schichtsystems 10 in Prozent im Wellenlängenbereich zwischen 280 nm und 1400 nm, und Figur 10 zeigt ein Detail der Darstellung in Figur 9 im Wellenlängenbereich 380 nm bis 780 nm. Die Reflektivität R des Schichtsystems 10 ist in Draufsicht auf das Schichtsystem 10, d.h. bei kleinen Winkeln AOI um 0° gemessen von der Oberflächennormalen 70 (Figur 1, 2), bestimmt.

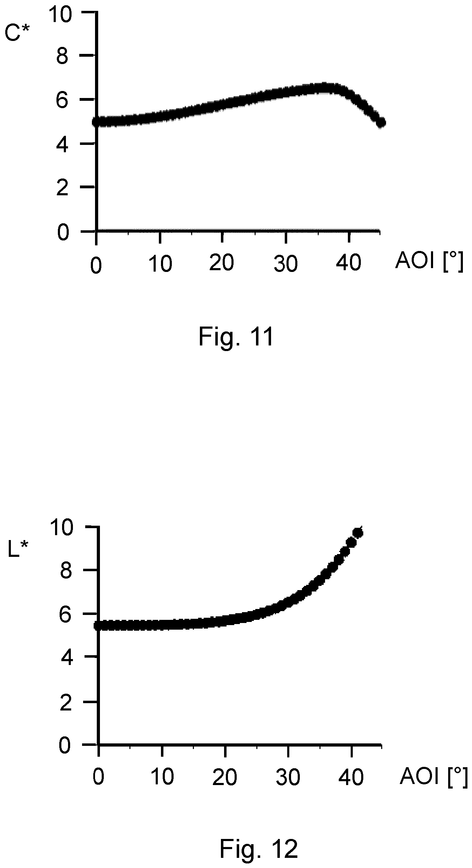

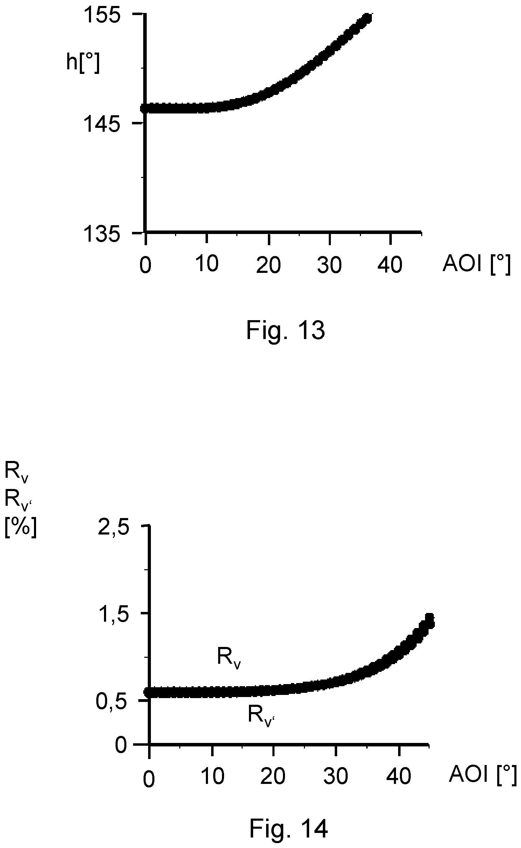

Figur 11 zeigt abhängig vom Betrachtungswinkel AOI zwischen 0° und 45° einen Verlauf der Buntheit C*, Figur 12 zeigt abhängig vom Betrachtungswinkel AOI zwischen 0° und 45° einen Verlauf der Helligkeit L*, Figur 13 zeigt abhängig vom Betrachtungswinkel AOI zwischen 0° und 45° einen Verlauf der Bunttonwinkels h. Figur 14 zeigt abhängig vom Betrachtungswinkel AOI zwischen 0° und 45° einen Verlauf des photopischen Reflexionsgrads Rv und des skotopischen Reflexionsgrads Rv'.

Die Reflektivität R fällt von etwa 55% bei 280 nm mit einem kleinen Maximum um 380 nm und steigt bei etwa 730 nm langsam wieder an (Figur 9). Wie zu erkennen ist, ist die Reflektivität R zwischen 430 nm und 730 nm sehr gering und liegt unter 1% (Figur 11). Um 530 nm und zwischen etwa 600 nm und etwa 700 nm liegt die Reflektivität R teilweise sogar unter 0,5%.

Im AOI-Intervall zwischen 0° und 45° steigt die Buntheit C* von etwa C*=5 bei 0° auf etwa C*=6 bei 30°, steigt leicht weiter an und fällt bei 40° dann ab Figur 11). Bei 45° beträgt der Wert der Buntheit C* ungefähr 5. Der höchste Wert der Buntheit C* liegt im AOI-Intervall für die Farbe Grün bei C*=7. Der höchste Wert der Buntheit C* liegt nahe am oberen Grenzwert des AOI-Intervalls.

Im AOI-Intervall zwischen 0° und 30° ist die Helligkeit L* fast konstant mit L*=5,5 und beginnt bei 25° anzusteigen und erreicht L*=10 bei 45° (Figur 12).

Im AOI-Intervall zwischen 0° und 45° ist der Bunttonwinkel h zwischen 0° und 20° nahezu konstant mit etwa h=147° und beginnt ab 20° leicht anzusteigen auf etwas über h=155° bei AOI=40° (Figur 13).

Für die Restreflexfarbe Grün ist die Änderung Δh des Bunttonwinkels h zwischen 0°≤AOI≤30° bevorzugt höchstens Δh=5°, besonders bevorzugt Δh=2°. Die Änderung Δh des Bunttonwinkels h zwischen 0°≤AOI≤45° ist bevorzugt höchstens Δh=5°, besonders bevorzugt höchstens Δh=4,6°.

Im AOI-Intervall zwischen 0° und 45° sind die Kurven des photopischen Reflexionsgrads Rv und des skotopischen Reflexionsgrads Rv' praktisch gleich und sind zwischen 0° und 30° nahezu konstant und bleiben beide bei 0,6 (Rv) bzw. 0,7-0,6 (Rv'). Die Kurven steigen zwischen AOI=30° bis 45° auf einen Wert von 1,5 (Figur 14).

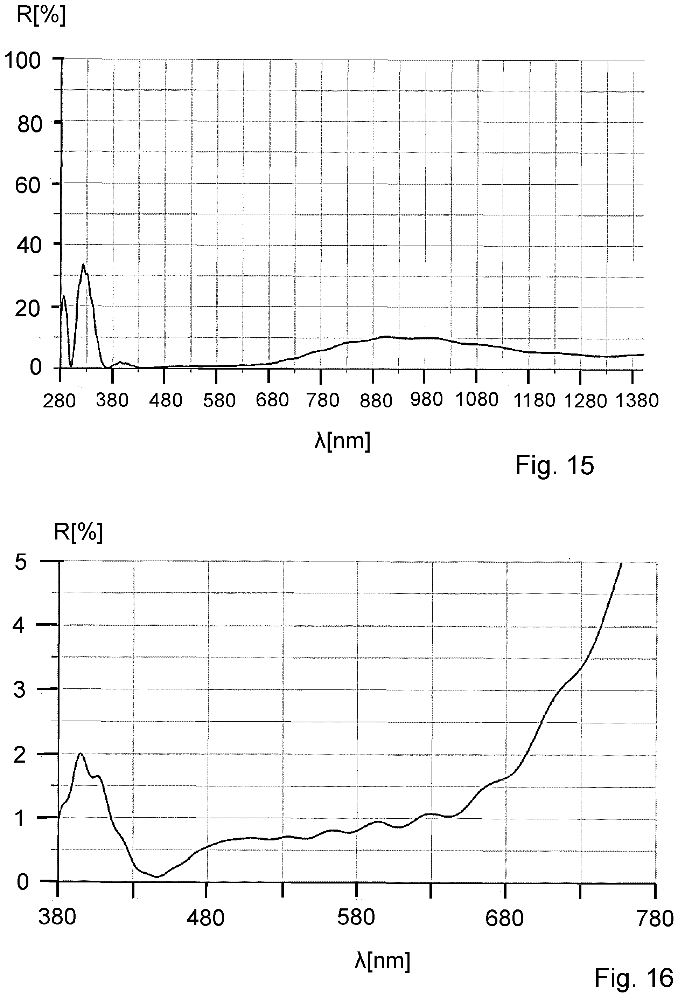

Die Figuren 15 bis 20 zeigen Werte eines erfindungsgemäßen Schichtsystems 10 mit der Restreflexfarbe Gelb.

Figur 15 zeigt eine Reflektivität R in Prozent des erfindungsgemäßen Schichtsystems 10 im Wellenlängenbereich zwischen 280 nm und 1400 nm, und Figur 16 zeigt ein Detail der Darstellung in Figur 9 im Wellenlängenbereich 380 nm bis 780 nm. Die Reflektivität R des Schichtsystems 10 ist in Draufsicht auf das Schichtsystem 10, d.h. bei kleinen Winkeln AOI um 0° gemessen von der Oberflächennormalen 70 (Figur 1, 2), bestimmt.

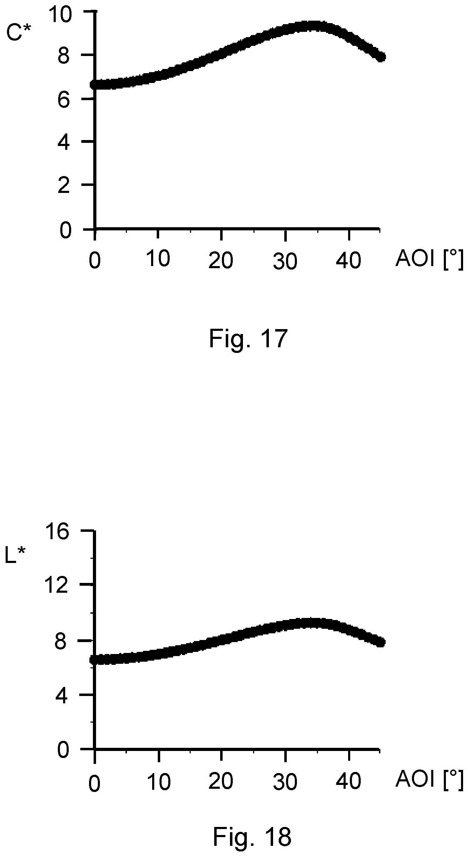

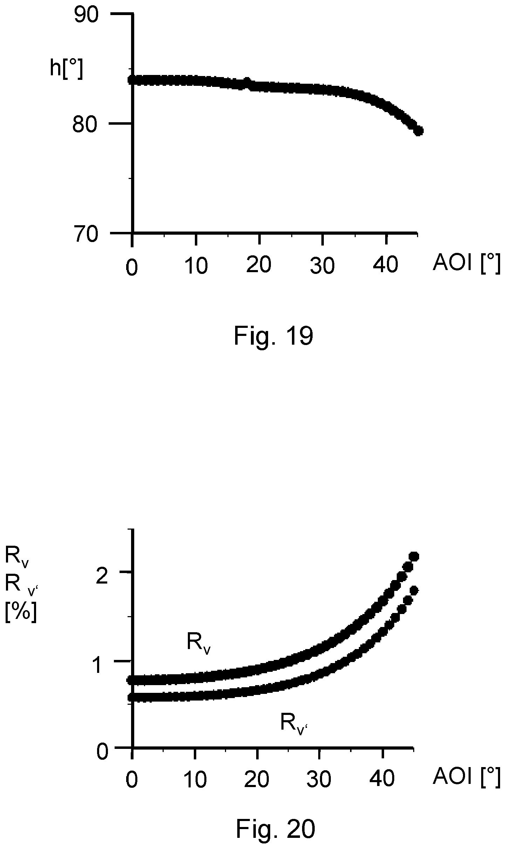

Figur 17 zeigt abhängig vom Betrachtungswinkel AOI zwischen 0° und 45° einen Verlauf der Buntheit C*, Figur 18 zeigt abhängig vom Betrachtungswinkel AOI zwischen 0° und 45° einen Verlauf der Helligkeit L*, Figur 19 zeigt abhängig vom Betrachtungswinkel AOI zwischen 0° und 45° einen Verlauf der Bunttonwinkels h. Figur 20 zeigt abhängig vom Betrachtungswinkel AOI zwischen 0° und 45° einen Verlauf des photopischen Reflexionsgrads Rv und des skotopischen Reflexionsgrads Rv'.

Die Reflektivität R fällt von etwa 20% bei 280 nm ab mit einem etwas höheren Maximum von etwas über 30% um 330 nm, bleibt dann niedrig und steigt bei etwa 680 nm langsam wieder an (Figur 15). Wie zu erkennen ist, ist die Reflektivität R zwischen 430 nm und 580 nm sehr gering und liegt unter 1% (Figur 16).

Im AOI-Intervall zwischen 0° und 45° steigt die Buntheit C* langsam von etwa 6,5 bei 0° auf etwa 9 bei 30° an, hat ein Maximum von 10 bei etwa 35° und fällt dann wieder ab (Figur 17). Bei 45° liegt der Wert der Buntheit C* bei 8. Der höchste Wert der Buntheit C* liegt im AOI-Intervall für die Farbe Gelb bei C*=10 oder knapp unterhalb davon. Der höchste Wert der Buntheit C* liegt knapp unterhalb des oberen Grenzwerts des AOI-Intervalls.

Im AOI-Intervall zwischen 0° und 25° zeigt die Helligkeit L* einen geringen Anstieg von etwa L*=6,5 bei 0° und L*=10 bei etwa 35° und fällt dann langsam wieder ab (Figur 18).

Im AOI-Intervall zwischen 0° und 45° fällt der Bunttonwinkel h zwischen 0° und 30° gering von etwa h=84° auf etwa h=83° und fällt dann ab 35° steiler ab (Figur 19).

Für eine Restreflexfarbe Gelb ist die Änderung Δh des Bunttonwinkels h zwischen 0°≤AOI≤30° bevorzugt höchstens Δh=1,5°, besonders bevorzugt Δh=0,9°. Die Änderung Δh des Bunttonwinkels h zwischen 0°≤AOI≤45° ist bevorzugt höchstens Δh=5, besonders bevorzugt höchstens Δh=4,6°.

Im AOI-Intervall zwischen 0° und 45° verlaufen die Kurven des photopischen Reflexionsgrads Rv und des skotopischen Reflexionsgrads Rv' zueinander parallel und steigen bis 20° nur geringfügig an und bleiben bei 0,5 (Rv') bzw. 0,7-0,6 (Rv) und steigen zwischen AOI=30° bis 45° auf einen Wert von 2 (Figur 20).

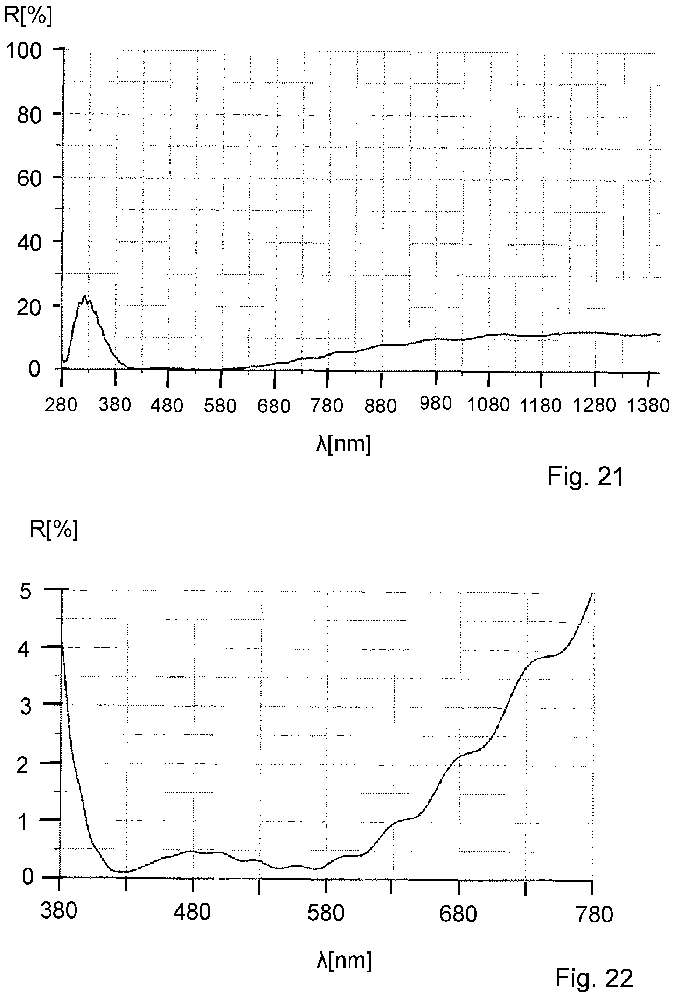

Die Figuren 21 bis 26 zeigen Werte eines erfindungsgemäßen Schichtsystems 10 mit der Restreflexfarbe Rot.

Figur 21 zeigt eine Reflektivität R in Prozent des erfindungsgemäßen Schichtsystems 10 im Wellenlängenbereich zwischen 280 nm und 1400 nm, und Figur 22 zeigt ein Detail der Darstellung in Figur 9 im Wellenlängenbereich 380 nm bis 780 nm. Die Reflektivität R des Schichtsystems 10 ist in Draufsicht auf das Schichtsystem 10, d.h. bei kleinen Winkeln AOI um 0° gemessen von der Oberflächennormalen 70 (Figur 1, 2), bestimmt.

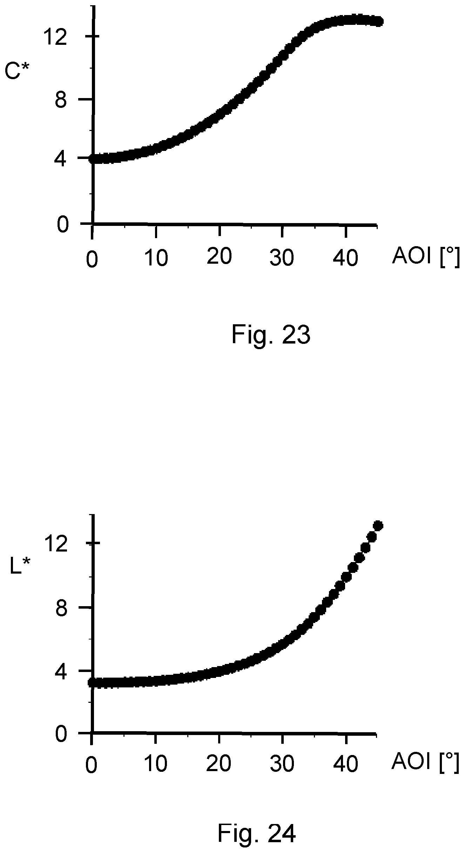

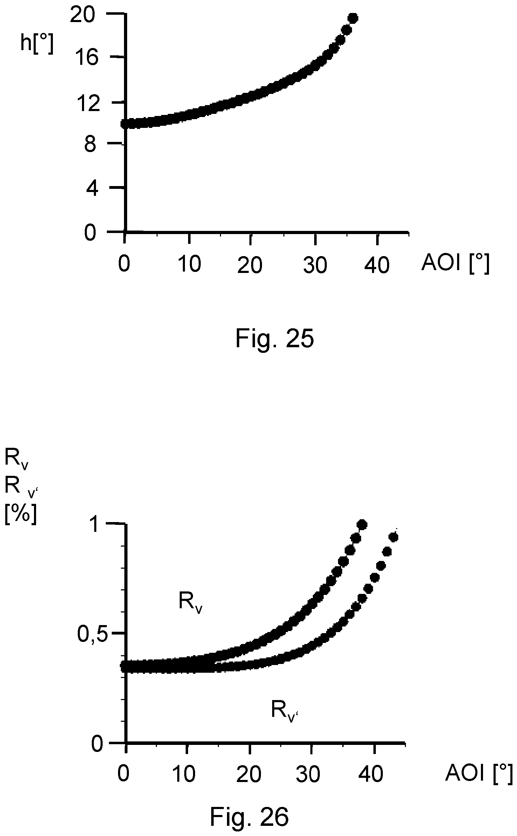

Figur 23 zeigt abhängig vom Betrachtungswinkel AOI zwischen 0° und 45° einen Verlauf der Buntheit C*, Figur 24 zeigt abhängig vom Betrachtungswinkel AOI zwischen 0° und 45° einen Verlauf der Helligkeit L*, Figur 25 zeigt abhängig vom Betrachtungswinkel AOI zwischen 0° und 45° einen Verlauf der Bunttonwinkels h. Figur 26 zeigt abhängig vom Betrachtungswinkel AOI zwischen 0° und 45° einen Verlauf des photopischen Reflexionsgrads Rv und des skotopischen Reflexionsgrads Rv'.

Die Reflektivität R zeigt um 330 nm ein Maximum von etwa 20% und fällt dann auf geringe Werte und steigt bei etwa 530 nm langsam wieder an (Figur 21). Wie zu erkennen ist, ist die Reflektivität R zwischen 430 nm und 600 nm sehr gering und liegt unter 0,5% (Figur 22).

Im AOI-Intervall zwischen 0° und 45° steigt die Buntheit C* von etwa C*=4 bei 0° auf etwa C*=10 bei 30°, um dann zwischen 35° und 45° konstant zu sein (Figur 23). Bei 45° liegt der Wert der Buntheit C* bei höchstens 14, z. B. zwischen 13 und 14. Der höchste Wert der Buntheit C* liegt im AOI-Intervall für die Farbe Rot bei C*=13. Der höchste Wert der Buntheit C* liegt nahe am oberen Grenzwert des AOI-Intervalls.

Im AOI-Intervall zwischen 0° und 25° variiert die Helligkeit L* kaum mit einem geringen Anstieg von etwa L*=3 und steigt bei 20° von etwa L*=4 auf etwa L*=14 bei 45° (Figur 24).

Im AOI-Intervall zwischen 0° und 45° steigt der Bunttonwinkel h zwischen 0° und 30° geringfügig von etwa h=10° auf etwas über h=16° und steigt dann steiler ab auf h=20° bei AOI=40° (Figur 25).

Für eine Restreflexfarbe Rot ist die Änderung Δh des Bunttonwinkels h zwischen 0°≤AOI≤30° bevorzugt höchstens Δh=6°, besonders bevorzugt höchstens Δh=5,3°. Die Änderung Δh des Bunttonwinkels h zwischen 0°≤AOI≤45° ist bevorzugt Δh=20°, besonders bevorzugt höchstens Δh=16,8°.

Im AOI-Intervall zwischen 0° und 45° variieren die Kurven des photopischen Reflexionsgrads Rv und des skotopischen Reflexionsgrads Rv' praktisch nicht zwischen 0° und 20° und starten beide bei 0,35, während die Kurve (Rv) stärker steigt als die Kurve (Rv')Sie steigen zwischen AOI=30° bis 45° auf einen Wert von 1 (Figur 26).

In der folgenden Tabelle 1 sind beispielshaft die Schichtdicken eines Schichtsystems mit vier Schichtpaketen 42, 44, 46, 48 angegeben:

Tabelle 1 Schichtdicken von Teilschichten 60, 62 für verschiedene Restreflexfarben.

| | | | Blau Dicke [nm] | Grün Dicke [nm] | Gelb Dicke [nm] | Rot Dicke [nm] |
|---|---|---|---|---|---|---|
| | | Luft | | | | |
| | 34 | Deckschicht | | | | |
| 48 | 62 | SiO$_2$ | 81,7 | 70,7 | 62 | 71 |
| | 64 | Funktionsschicht | 12 | 16,6 | 12 | 12 |
| | 60 | Ta$_2$O$_5$ | 119,2 | 103 | 136 | 72 |
| 46 | 62 | SiO$_2$ | 17,6 | 19,1 | 9 | 13,48 |
| | 60 | Ta$_2$O$_5$ | 27,4 | 24,6 | 72 | 3,5 |
| 44 | 62 | SiO$_2$ | 49,7 | 75,9 | 6,7 | 4 |
| | 60 | Ta$_2$O$_5$ | 20,1 | 12 | 62 | 29,4 |
| 42 | 62 | SiO$_2$ | 54,9 | 64,3 | 28,8 | 41 |
| | 60 | Ta$_2$O$_5$ | 7,5 | 5 | 20 | 5 |
| | 32 | Zwischenschicht | | | | |
| | 20 | Substrat | | | | |

Erkennbar ist, dass bei gleichbleibenden Schichtmaterialien von hochbrechender substratnäherer Teilschicht 60 und niedrigbrechender substratfernerer Teilschicht 62 die Farbe des Restreflexes alleine durch Veränderung der Schichtdicken der Teilschichten 60, 62 gelingt. Beispielsweise wird für alle hochbrechenden Teilschichten 60 Ta$_2$O$_5$ eingesetzt und für die niedrigbrechenden Teilschichten 62 SiO$_2$.

Lediglich in dem substratfernsten Schichtpaket 48 ist eine vorzugsweise niedrigbrechende Funktionsschicht 64 zwischen der ersten und zweiten Teilschicht 60, 62 angeordnet. Diese dient beispielsweise zur Erhöhung der elektrischen Leitfähigkeit und/oder zur mechanischen Spannungsegalisierung und/oder als Diffusionssperre.

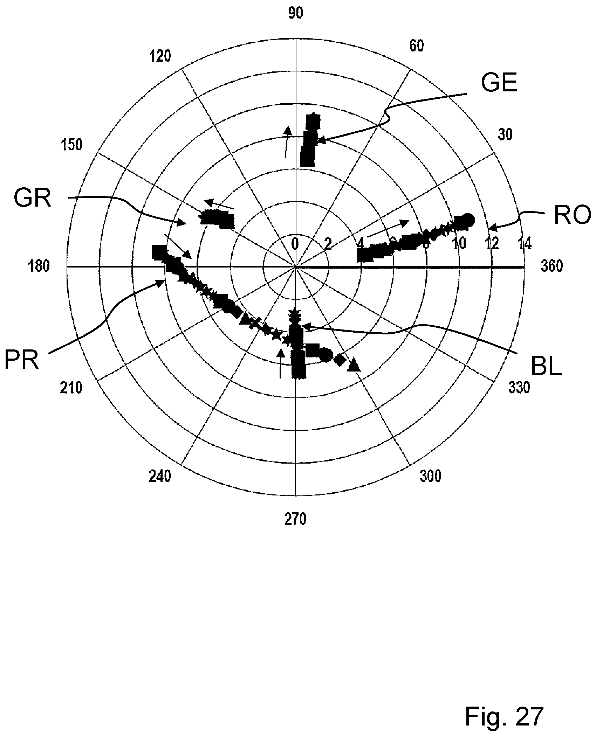

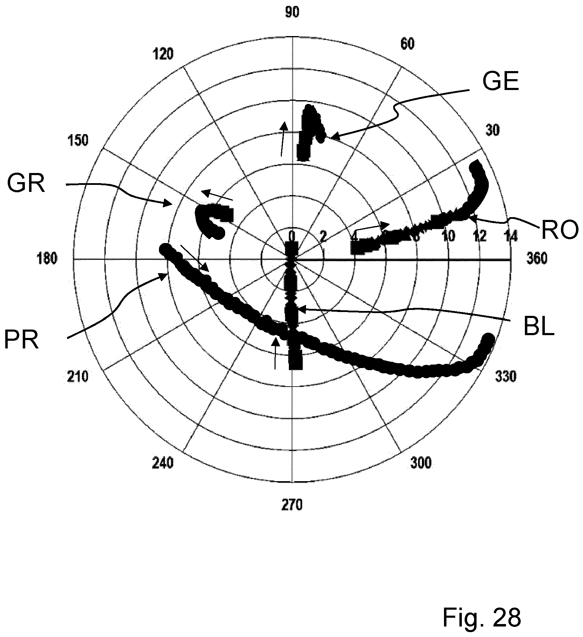

Der Unterschied zwischen den Ergebnissen an erfindungsgemäßen Schichtsystemen 10 mit den Restreflexfarben Blau, Grün, Gelb, Rot und der Restreflexfarbe eines bekannten Schichtsystems aus dem Stand der Technik für ein Betrachtungswinkelintervall von 0° bis 30° ist in Figur 27 in einer Darstellung in Polarkoordinaten ersichtlich. Figur 28 zeigt dieselbe Darstellung mit einem größeren Betrachtungswinkelintervall von 0° bis 45°.

Wie aus den beiden Figuren ersichtlich ist, können unterschiedliche Reflexfarben mit hoher Farbkonstanz erreicht werden. Durch den relativ geringen Wert der Buntheit C* von höchstens 16, besonders bevorzugt von höchstens 14, am oberen Grenzwert des Betrachtungswinkels AOI erfolgt eine Farbfestlegung des Restreflexes.

In diesen beiden Polardiagrammen ist der Farbwinkel h der Winkel des Diagramms von 0° bis 360° und die Buntheit C* als Radius mit Werten von 0 bis 14 angegeben.

Dabei bezeichnet BL den Verlauf der Restreflexfarbe Blau, GR den Verlauf der Restreflexfarbe Grün, GE den Verlauf der Restreflexfarbe Gelb, RO den Verlauf der Restreflexfarbe Rot und PR den Verlauf der Restreflexfarbe eines Schichtsystems nach dem Stand der Technik.

Die kleinen Pfeile neben den Messpunkten geben die Richtung der Änderung des Betrachtungswinkels AOI von 0° bis 30° bzw. 0° bis 45 ° in Figur 28 an. Die Messwerte der unterschiedlichen Restreflexfarben des erfindungsgemäßen Schichtsystems 10 verlaufen praktisch auf Geraden durch das Zentrum der Darstellung. Die Geraden geben in dieser Darstellung die verschiedenen Restreflexfarben an.

Für eine typische Restreflexfarbe Grün bei 0° eines handelsüblichen Brillenglases mit reflexmindernder Beschichtung nach dem Stand der Technik liegt die Änderung Δh des Bunttonwinkels h zwischen 0°≤AOI≤30° dagegen typischerweise bei Δh=127,2°. Die Farbe des Restreflexes verändert sich von grün über blau nach rot.

Die Änderung des Bunttonwinkels h zwischen 0°≤AOI≤45° liegt typischerweise bei 161,7°.

Für die Restreflexfarbe Blau ist die Änderung Δh des Bunttonwinkels h zwischen 0°≤AOI≤30° bevorzugt höchstens Δh=4°, besonders bevorzugt höchstens Δh=3,5°. Die Änderung Δh des Bunttonwinkels h zwischen 0°≤AOI≤33° ist bevorzugt höchstens Δh=5°, besonders bevorzugt höchstens Δh=4,5°.

Für eine Restreflexfarbe Grün ist die Änderung Δh des Bunttonwinkels h zwischen 0°≤AOI≤30° bevorzugt höchstens Δh=3°, besonders bevorzugt höchstens Δh=2°. Die Änderung Δh des Bunttonwinkels h zwischen 0°≤AOI≤45° ist bevorzugt höchstens Δh=5°, besonders bevorzugt höchstens Δh=4,6°.

Für eine Restreflexfarbe Gelb ist die Änderung Δh des Bunttonwinkels h zwischen 0°≤AOI≤30° bevorzugt höchstens Δh=1,5°, besonders bevorzugt höchstens Δh=0,9°. Die Änderung Δh des Bunttonwinkels h zwischen 0°≤AOI≤45° ist bevorzugt höchstens Δh=5°, besonders bevorzugt höchstens Δh=4,6°.

Für eine Restreflexfarbe Rot ist die Änderung Δh des Bunttonwinkels h zwischen 0°≤AOI≤30° bevorzugt höchstens Δh=6°, besonders bevorzugt höchstens Δh=5,3°. Die Änderung Δh des Bunttonwinkels h zwischen 0°≤AOI≤45° ist bevorzugt höchstens Δh=20°, besonders bevorzugt höchstens Δh=16,8°.

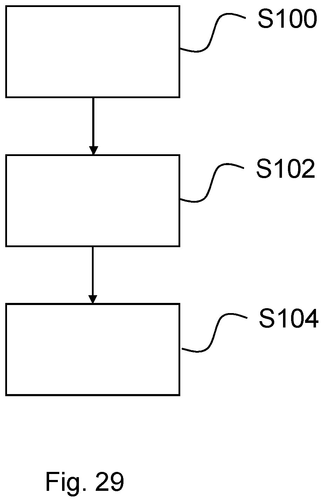

Figur 29 zeigt ein Flussdiagramm eines günstigen Verfahrens zur Auslegung eines erfindungsgemäßen optischen Elements 100.

Im Verfahren zur Auslegung eines erfindungsgemäßen optischen Elements 100 wird in Schritt S100 ein Schichtdesign definiert. Das Schichtdesign umfasst zumindest ein erstes Material für hochbrechende Teilschichten 60 und ein zweites Material für niedrigbrechende Teilschichten 62, die Anzahl gewünschter Schichtpakete 42, 44, 46, 48, oder 42, 44, 46, 48, 50 mit den Teilschichten 60, 62, den Startwerten der Dicke der Teilschichten 60, 62 und dergleichen.

In Schritt S102 werden Ziel-Farbwerte definiert. Die Zielfarbwerte umfassen Helligkeit L*, Buntheit C* und Bunttonwinkel h zumindest an Grenzwerten für ein Intervall eines Betrachtungswinkels AOI mit Grenzwerten von 0° und 30°. Als Optimierungsvorgabe kann optional eine Reflexionskurve vorgegeben sein, bevorzugt ist jedoch die Angabe der Ziel-Farbwerte bei den Grenzwerten des Betrachtungswinkels 0° und 30°.

In Schritt S104 wird ein Optimierungsverfahren zur Variation der Einzelschichtdicken durchgeführt, bis ein Optimierungsziel erreicht ist. Das Optimierungsverfahren variiert dann so lange die Einzelschichtdicken, bis das Optimierungsziel (Farbstabilität) erreicht ist.

Vorteilhaft werden die Ziel-Farbwerte an den Grenzwerten des Intervalls gleich oder möglichst ähnlich gewählt, wobei vorzugsweise lediglich die genannten Änderungen Δh des Bunttonwinkels h zugelassen werden.

Typischerweise kann ein angepasster Simplex-Algorithmus als Berechnungsverfahren verwendet werden, jedoch können andere bekannte Simulationsverfahren ebenso geeignet sein. Simulationssoftware für derartige Optimierungsverfahren ist von verschiedenen Herstellern kommerziell erhältlich, beispielswiese die kommerzielle Simulationssoftware "Essential MacLeod" oder andere bekannte Simulationssoftware für die Herstellung optischer Schichten.

**Patentansprüche**

1. Optisches Element (100), umfassend ein Substrat (20) und ein interferometrisch reflexminderndes Schichtsystem (10) auf wenigstens einer Oberfläche (22) des Substrats (20),

   wobei das Schichtsystem (10) einen Stapel (40) von mindestens vier aufeinander folgenden Schichtpaketen (42, 44, 46, 48) umfasst, wobei jedes Schichtpaket (42, 44, 46, 48) eine erste Teilschicht (60) mit einer ersten optischen Dicke (t1) und eine zweite Teilschicht (62) mit einer zweiten, von der ersten optischen Dicke (t1) verschiedenen optischen Dicke (t2) umfasst,
   wobei ein Brechungsindex (n1) der jeweils substratnäheren ersten Teilschicht (60) größer ist als ein Brechungsindex (n2) der jeweils substratferneren zweiten Teilschicht (62) des Stapels (40),
   wobei das Schichtsystem (10) eine Helligkeit (L*), eine Buntheit (C*) und einen Bunttonwinkel (h) einer Restreflexfarbe aufweist,

   **dadurch gekennzeichnet, dass**
   der Bunttonwinkel (h) in einem Intervall eines Betrachtungswinkels (AOI) mit den Grenzwerten 0° und 30° bezogen auf eine Oberflächennormale (70) auf das Schichtsystem (10) sich um höchstens 15° ändert.

2. Optisches Element nach Anspruch 1, wobei:
der Betrag einer Änderung (Δh) des Bunttonwinkels (h) der Restreflexfarbe Blau in dem Intervall eines Betrachtungswinkels (AOI) mit den Grenzwerten 0° und 30° bezogen auf eine Oberflächennormale (70) auf das Schichtsystem (10) höchstens 4° ist.

3. Optisches Element nach Anspruch 1 oder 2, wobei:
der Betrag einer Änderung (ΔC*) der Buntheit (C*) der Restreflexfarbe Blau im Intervall des Betrachtungswinkels (AOI) höchstens etwa 4 ist;

4. Optisches Element nach Anspruch 1, wobei:
der Betrag einer Änderung (Δh) des Bunttonwinkels (h) der Restreflexfarbe Grün in dem Intervall eines Betrachtungswinkels (AOI) mit den Grenzwerten 0° und 30° bezogen auf eine Oberflächennormale (70) auf das Schichtsystem (10) höchstens 3° ist.

5. Optisches Element nach Anspruch 1 oder 4, wobei:
der Betrag einer Änderung (ΔC*) der Buntheit (C*) der Restreflexfarbe Grün im Intervall des Betrachtungswinkels (AOI) höchstens etwa 1 ist.

6. Optisches Element nach Anspruch 1, wobei:
der Betrag einer Änderung (Δh) des Bunttonwinkels (h) der Restreflexfarbe Gelb in dem Intervall eines Betrachtungswinkels (AOI) mit den Grenzwerten 0° und 30° bezogen auf eine Oberflächennormale (70) auf das Schichtsystem (10) höchstens 1,5° ist.

7. Optisches Element nach Anspruch 1 oder 6, wobei:
der Betrag einer Änderung (ΔC*) der Buntheit (C*) der Restreflexfarbe Gelb im Intervall des Betrachtungswinkels (AOI) höchstens etwa 2,5 ist;

8. Optisches Element nach Anspruch 1, wobei:
der Betrag einer Änderung (Δh) des Bunttonwinkels (h) der Restreflexfarbe Rot in dem Intervall eines Betrachtungswinkels (AOI) mit den Grenzwerten 0° und 30° bezogen auf eine Oberflächennormale (70) auf das Schichtsystem (10) höchstens 6° ist.

9. Optisches Element nach Anspruch 1 oder 8, wobei:
der Betrag einer Änderung (ΔC*) der Buntheit (C*) der Restreflexfarbe Rot im Intervall des Betrachtungswinkels (AOI) höchstens etwa 6 ist.

10. Verfahren zur Auslegung eines optischen Elements (100) nach einem der vorhergehenden Ansprüche, wobei folgende Schritte ausgeführt werden:

- Definieren (S100) eines Schichtdesigns, umfassend zumindest ein erstes Material für hochbrechende Teilschichten (60) und ein zweites Material für niedrigbrechende Teilschichten (62), Anzahl gewünschter Schichtpakete (42, 44, 46, 48, 50) mit den Teilschichten (60, 62), Startwerte der Dicke der Teilschichten (60, 62);
- Definieren (S102) von Ziel-Farbwerten, umfassend Helligkeit (L*), Buntheit (C*) und Bunttonwinkel (h) zumindest an Grenzwerten für ein Intervall eines Betrachtungswinkels (AOI) mit Grenzwerten von 0° und 30°;
- Durchführen (S104) eines Optimierungsverfahrens zur Variation der Einzelschichtdicken, bis ein Optimierungsziel erreicht ist.

Fig. 1

Fig. 2

R[%]

Fig. 3

R[%]

Fig. 4

Fig. 5

Fig. 6

Fig. 7

Fig. 8

R[%]

Fig. 9

R[%]

Fig. 10

Fig. 11

Fig. 12

Fig. 13

Fig. 14

R[%]

Fig. 15

R[%]

Fig. 16

Fig. 17

Fig. 18

Fig. 19

Fig. 20

Fig. 21

Fig. 22

Fig. 23

Fig. 24

Fig. 25

Fig. 26

Fig. 27

Fig. 28

S100

S102

S104

Fig. 29

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2016110339 A1